# EUROPÄISCHE PATENTSCHRIFT

(11) **EP 1 916 459 B1**
(45) Veröffentlichungstag und Bekanntmachung des Hinweises auf die Patenterteilung: **14.12.2011**
(21) Anmeldenummer: 07118907.0
(22) Anmeldetag: 19.10.2007
(51) Int. Cl.: A47J 31/46, F16K 11/074

(54) **Heissgetränkeautomat mit einem keramischen Scheibenventil**
Hot beverages machine witch a ceramic disc valve
Distributeur de boissons chaudes avec une vanne papillon en céramique

(30) Priorität: 23.10.2006 DE 102006049894
(43) Veröffentlichungstag der Anmeldung: 30.04.2008
(73) Patentinhaber: BSH Bosch und Siemens Hausgeräte GmbH, 81739 München (DE)
(72) Erfinder: Daburger, Josef, 83313, Siegsdorf / Hammer (DE); Mathes, Anton, 83364, Neukirchen am Teisenberg (DE); Schneiderbauer, Gottfried, 84553, Halsbach (DE)

(56) Entgegenhaltungen:
- DE-A1- 4 427 745
- DE-U1- 20 316 356
- US-A- 4 224 958
- US-A- 4 632 024

## Beschreibung

Die Erfindung betrifft einen Heißgetränkeautomaten umfassend ein elektrisch betreibbares keramisches Scheibenventil.

Keramische Scheibenventile sind bekannt, beispielsweise aus der EP 149 252 B1, und werden unter anderem in Heißgetränkeautomaten, wie beispielsweise in Kaffeevollautomaten oder in Espressomaschinen eingesetzt.

Insbesondere in Heißgetränkeautomaten dienen keramische Scheibenventile dazu, Heißwasser entweder dem Kaffeemehl für die Zubereitung von Kaffee oder der Aufschäumdüse zum Erhitzen und Aufschäumen von Milch für die Zubereitung von Cappuccino zuzuführen. In einer weiteren Schaltstellung wird durch das Ventil ein Weg zu einer Drainageöffnung frei geschaltet, so dass sich gegebenenfalls vorhandener Dampf im Durchlauferhitzer entspannen kann.

Aus der EP 0 307 497 A1 ist ein Keramikventil mit dicht aufeinanderliegenden, aber gegeneinander bewegbaren und mit Verteilerkanälen versehenen Keramikscheiben bekannt. Die Keramikscheiben sind konzentrisch angeordnet, wobei eine erste, als Verteilerscheibe ausgebildete Keramikscheibe im Scheibenzentrum eine durchgehende Zuströmbohrung und exzentrisch dazu auf etwa gleichem Radius und voneinander beabstandet durchgehende Verteilerbohrungen aufweist. Ein weiteres Kevamikventil ist aus US 4632024 bekannt.

Eine dicht auf der ersten Keramikscheibe aufliegende und gegenüber dieser um das Scheibenzentrum verschwenkbare zweite, als Steuerscheibe ausgebildete Keramikscheibe weist eine sich vom Scheibenzentrum radial nach außen erstreckende Verteilerausnehmung auf, deren Öffnung der Verteilerscheibe zugewandt ist und deren Länge dem radialen Abstand zwischen der Zuströmbohrung und den Verteilerbohrungen der Verteilerscheibe angepasst ist. Die Funktionsweise des Ventils ist dergestalt, daß das Heißwasser durch die Zuströmbohrung der Verteilerscheibe in die Verteilerausnehmung der Steuerscheibe strömt und von dort radial nach außen um 90° umgelenkt wird und am Ende der Verteilerausnehmung nach einer erneuten Umlenkung um 90° durch eine der Verteilerbohrungen der Verteilerscheibe wieder zurückströmt, d.h. genauer zu einer der einzelnen Zubereitungseinrichtungen strömt.

Auf der der Verteilerscheibe abgewandten Seite der Steuerscheibe kann eine dritte, als Grundscheibe ausgebildete Keramikscheibe angebracht sein, gegenüber welcher die Steuerscheibe verdrehbar ist. Das bedeutet, dass die Steuerscheibe nunmehr zwischen zwei Keramikscheiben, nämlich der Verteilerscheibe und der Grundscheibe verdreht wird, wodurch auf beiden Seiten der Steuerscheibe gleiche Verhältnisse herrschen.

In dem vorbezeichneten Keramikventil vollzieht das Heißwasser mittels der Verteilerkanäle eine 180° Wendung, um von der Zuströmbohrung über einen Verteilerkanal zu einer der Verteilerbohrungen zu gelangen.

Bedingt durch Temperaturen in Heißgetränkeautomaten von bis zu über 100 °C haftet insbesondere in den Verteilerkanälen Kalk an bzw. lagert sich dort ab, so dass das Ventil schließlich zugesetzt ist. Ursächlich dafür ist, dass die Verteilerkanäle nicht wie ebene Flächen poliert werden können. Die verbleibende Rauhigkeit dient als Haftgrund für Kalkpartikel. Daher leiden keramische Scheibenventile gemäß dem Stand der Technik, häufig an einem hohen Verschleiß und an Funktionsstörungen.

Aufgabe der Erfindung ist es einen Heißgetränkeautomaten umfassend ein elektrisch betreibbares keramisches Scheibenventil bereitzustellen, der eine geringere Anfälligkeit für Verkalkungen aufweist.

Gelöst wird die Aufgabe durch einen Heißgetränkeautomaten mit einem elektrisch betreibbaren keramischen Scheibenventil, mit einer in einer ersten Haltevorrichtung mit zumindest zwei Zuströmleitungen für Heißwasser und Heißdampf drehfest gehaltenen Frontscheibe mit zumindest zwei Zuströmbohrungen, einer drehbaren Steuerscheibe mit Durchströmbohrungen und einer in einer zweiten Haltevorrichtung mit zumindest zwei Abströmleitung für Heißwasser und Heißdampf drehfest gehaltenen Rückscheibe mit zumindest zwei Abströmbohrungen, das dadurch gekennzeichnet ist, dass sich in zumindest einem freigeschalteten Zustand eine Zuströmbohrung, eine Durchströmbohrung und eine Abströmbohrung decken.

Vorteilhafte Ausgestaltungen und Weiterbildungen des erfindungsgemäßen Heißgetränkeautomaten mit einem elektrisch betreibbaren keramischen Scheibenventil sind in den Unteransprüchen beschrieben.

Erfindungsgemäß decken sich in zumindest einem freigeschalteten Zustand eine Zuström-, eine Durchström- und eine Abströmbohrung, so dass beispielsweise Heißwasser oder Heißdampf, die drei die Scheiben durchsetzenden Bohrungen laminar durchströmt.

Es wurde gefunden, dass sich bei herkömmlichen Scheibenventilen, insbesondere in den nicht polierten Verteilerkanälen, mittels dieser Heißwasser in Richtung Brühkammer geleitet wird, Kalk ablagert. Das erfindungsgemäße Scheibenventil hingegen wird von dem Heißwasserstrom unmittelbar passiert, d. h. ohne dass es über Verteilerkanäle geleitet wird, so dass sich kein Kalk an- oder ablagern kann.

Die Funktionsweise des Scheibenventils ist dergestalt, dass das von einer Heizvorrichtung erhitzte Heißwasser oder der erhitzte Heißdampf eine Zuströmleitung einer ersten Haltevorrichtung, eine Zuströmbohrung der Frontscheibe, eine Durchströmbohrung der Steuerscheibe, eine Abströmbohrung der Rückscheibe und schließlich eine Abströmleitung einer zweiten Haltevorrichtung auf geradem Weg durchströmt.

In einer bevorzugten Ausführungsform des erfindungsgemäßen Heißgetränkeautomaten decken sich eine Zuströmbohrung, eine Durchströmbohrung und eine Abströmbohrung des Scheibenventils, wenn der Durchfluss für Heißwasser in Richtung Brühkammer oder in Richtung Heißwasserauslauf freigeschaltet ist.

In einer weiteren bevorzugten Ausführungsform des erfindungsgemäßen Heißgetränkeautomaten weist die erste Haltevorrichtung des Scheibenventils einen Drainagenablauf und die zweite Haltevorrichtung einen Drainagenzulauf auf. In einer weiteren bevorzugten Ausführungsform des erfindungsgemäßen Heißgetränkeautomaten weist die zweite Haltevorrichtung des Scheibenventils eine Abströmleitung in Richtung eines Dampfentspannungsbehälters auf.

Das Scheibenventil wird aus drei konzentrisch angeordneten Keramikscheiben gebildet, wobei eine Frontscheibe zumindest zwei die Scheibe durchsetzende Zuströmbohrungen umfasst.

Am Außenumfang weist die Frontscheibe Nuten auf, mittels der sie durch eine geeignete erste Haltevorrichtung drehfest gehalten wird. Diese erste Haltevorrichtung weist zumindest zwei Zuströmleitungen auf, wobei zumindest eine Zuströmleitung für Heißwasser und eine Zuströmleitung für Heißdampf vorgesehen ist. Die Aufnahmefläche der Haltevorrichtung zur Aufnahme der Frontscheibe, weist Verteilerkanäle auf. Ein erster Verteilerkanal wird dabei über zumindest eine Zuströmleitung, bevorzugt über die Zuströmleitung für Heißdampf versorgt.

Die Haltevorrichtung kann kraft- und/oder formschlüssig mit dem Gehäuse des Heißgetränkeautomaten verbunden sein, oder mit diesem einstückig ausgebildet sein.

Bevorzugt liegt zwischen der ersten Oberfläche der Frontscheibe und der Aufnahmefläche der ersten Haltevorrichtung sowie zwischen der ersten Oberfläche einer Rückscheibe und der Aufnahmefläche einer zweiten Haltevorrichtung eine Dichtung mit angepassten Durchgangsbohrungen.

Die Rückscheibe umfasst zumindest zwei die Scheibe durchsetzende Abströmbohrungen. Am Außenumfang weist die Rückscheibe Nuten auf, mittels der sie durch eine geeignete zweite Haltevorrichtung drehfest gehalten wird. Diese zweite Haltevorrichtung weist zumindest zwei Abströmleitungen auf, wobei zumindest eine Abströmleitung für Heißwasser und eine Abströmleitung für Heißdampf vorgesehen ist.

Die Aufnahmefläche der zweiten Haltevorrichtung zur Aufnahme der Rückscheibe, weist Verteilerkanäle auf. Ein erster Verteilerkanal wird dabei über zumindest eine Abströmbohrung versorgt. Die zweite Haltevorrichtung ist kraft- und/oder formschlüssig mit der ersten Haltevorrichtung verbunden oder mit dieser einstückig ausgebildet. Die keramische Rückscheibe besteht vorzugsweise aus Aluminiumoxid.

Eine Steuerscheibe umfasst zumindest drei die Scheibe durchsetzende Durchströmbohrungen. Die Durchströmbohrungen sind radial auf zumindest zwei verschiedenen Kreisbahnen angeordnet. Am Außenumfang weist die Steuerscheibe Nuten auf, mittels der sie durch eine geeignete dritte Haltevorrichtung, beispielsweise durch einen Käfig gehalten wird. Diese dritte Haltevorrichtung ist manuell oder maschinell verschwenkbar und zwischen der ersten und der zweiten Haltevorrichtung angeordnet. Bevorzugt wird sie über ein Getriebe elektromotorisch verschwenkt. Die keramische Steuerscheibe besteht vorzugsweise aus Siliziumcarbid.

Gemäß einer bevorzugten Ausführungsform ist zumindest eine Durchströmbohrung der Steuerscheibe als Langloch ausgebildet. Damit wird ein Toleranzbereich im Hinblick auf die Position der Steuerscheibe geschaffen.

In einer weiteren bevorzugten Ausführungsform sind in der Steuerscheibe zwei verschieden hohe Langlöcher, die alternativ für die Heißwasserdurchleitung zwischen Heizvorrichtung und Brühkammer verwendet können, vorgesehen, um die Durchflussmenge des Heißwassers einzustellen. So erfolgt beispielsweise die Füllung einer kleinen Tasse über ein flaches Langloch oder einer Vielzahl kleiner Löcher, die in Summe einen weit kleineren Durchflussquerschnitt aufweisen als ein hohes Langloch, und die Füllung einer großen Tasse über ein höheres Langloch als Durchströmbohrung.

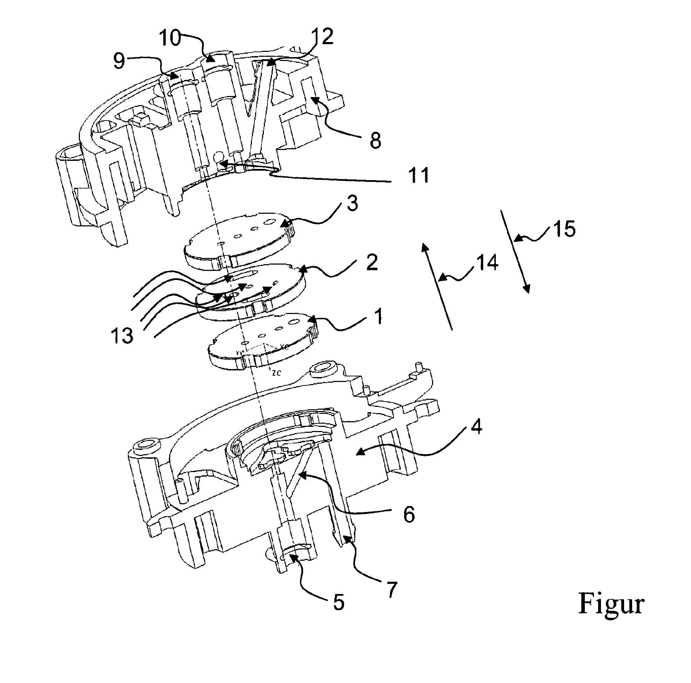

Im Folgenden wird ein Ausführungsbeispiel der Erfindung anhand einer Zeichnung näher erläutert. Die Figur zeigt eine Explosionsdarstellung des erfindungsgemäßen Scheibenventils.

Das Scheibenventil wird aus drei konzentrisch angeordneten Keramikscheiben 1, 2 und 3 gebildet, wobei die Frontscheibe 1 vier die Scheibe durchsetzende Zuströmbohrungen umfasst. Am Außenumfang weist die Frontscheibe 1 Nuten auf, mittels der sie durch die Haltevorrichtung 4 drehfest gehalten wird. Die keramische Frontscheibe 1 besteht vorzugsweise aus Aluminiumoxid.

Die Haltevorrichtung 4 weist eine Zuströmleitung 5 und eine Zuströmleitung 6 von der Heizvorrichtung in Richtung Scheibenventil auf. Die Zuströmleitung 6 ist in dieser Ausführungsform als Abzweigung von der Zuströmleitung 5 ausgebildet. Zudem weist die Haltevorrichtung 4 einen Drainagenablauf 7 vom Scheibenventil in Richtung Restwasserschale auf.

Die Aufnahmefläche der Haltevorrichtung 4, auf der die erste Oberfläche der Frontscheibe 1 formschlüssig aufliegt, weist Verteilerkanäle auf, die die vier Zuströmbohrungen der Frontscheibe 1 mit Heißwasser bzw. Heißdampf beaufschlagen oder über die Restwasser in Richtung Drainagenablauf abgeleitet wird.

Bevorzugt liegt zwischen der ersten Oberfläche der Frontscheibe 1 und der Aufnahmefläche der ersten Haltevorrichtung 4 sowie zwischen der ersten Oberfläche der Rückscheibe 3 und der Aufnahmefläche der zweiten Haltevorrichtung 8 eine Dichtung (nicht in der Figur), beispielsweise aus Silicon, mit angepassten Durchgangsbohrungen.

Die Rückscheibe 3 umfasst vier die Scheibe durchsetzende Abströmbohrungen. Am Außenumfang weist die Rückscheibe 3 Nuten auf, mittels der sie durch die Haltevorrichtung 8 drehfest gehalten wird. Die Haltevorrichtung 8 weist eine Abströmleitung 9 vom Scheibenventil in Richtung Brühkammer bzw. Heißwasserauslauf, eine Abströmleitung 10 vom Scheibenventil in Richtung Heißdampfauslass und eine Abströmleitung 11 vom Scheibenventil in Richtung Dampfentspannungsbehälter auf. Zudem ist in der Haltevorrichtung 8 ein Drainagenzulauf 12 von der Brühkammer in Richtung Scheibenventil ausgebildet.

Die Aufnahmefläche der Haltevorrichtung 8, auf der eine Oberfläche der Rückscheibe 3 formschlüssig aufliegt, weist Verteilerkanäle auf, die die Abströmleitungen 10 und 11 der Haltevorrichtung 8 mit Heißdampf beaufschlagen. Ein erster Verteilerkanal wird dabei über zumindest eine Abströmbohrung versorgt. Die zweite Haltevorrichtung 8 ist kraft-und/oder formschlüssig mit der ersten Haltevorrichtung 4 verbunden oder mit dieser einstückig ausgebildet. Die keramische Rückscheibe 3 besteht vorzugsweise aus Aluminiumoxid.

Die Steuerscheibe 2 umfasst sechs die Scheibe durchsetzende Durchströmbohrungen 13. Sie sind auf verschiedenen Kreisbahnen angeordnet und haben unterschiedliche Größe. Durch die radiale Anordnung der Durchströmbohrungen 13 auf verschiedenen Kreisbahnen wird vermieden, dass Kaffeereste beim Verschwenken der Steuerscheibe vom Drainagenzulauf 12 in eine der Abströmleitungen 9, 10 oder 11 gelangen. Die radial auf der äußersten Kreisbahn gelegene Durchströmbohrung dient vorzugsweise als Drainageventil für die Brühkammer. Das Drainageventil befindet sich dabei zwischen einem Schlauchanschluss zur Brühkammer und einem Auffangbehälter für Restwasser.

Am Außenumfang weist die Steuerscheibe 2 Nuten auf, mittels der sie durch eine die dritte Haltevorrichtung (nicht in der Figur), beispielsweise durch einen Käfig gehalten wird. Diese dritte Haltevorrichtung ist manuell oder maschinell verschwenkbar und zwischen der ersten und der zweiten Haltevorrichtung angebracht. Bevorzugt wird sie über ein Getriebe elektromotorisch verschwenkt. Die keramische Steuerscheibe 2 besteht vorzugsweise aus Siliziumcarbid.

In der Figur ist mit den Pfeilen die Fließrichtung des Wassers bzw. des Dampfs angegeben; so bezeichnet 14 die Fließrichtung des Reinwassers und 15 die Fließrichtung des Restwassers.

In einer weiteren bevorzugten Ausführungsform wird die dritte Haltevorrichtung umfassend der Steuerscheibe elektromotorisch verschwenkt. Die Positionsermittlung erfolgt beispielsweise über eine Lichtschranke, die ein definiertes Lochraster auf der dritten Haltevorrichtung erfasst. Der Lochkreis ist koaxial mit der Bewegung der Steuerscheibe angeordnet.

Durch die verschiedenen Lochabstände erhält eine Datenverarbeitungseinrichtung Informationen darüber, in welcher Position sich die Steuerscheibe gerade befindet und mit welcher Geschwindigkeit und in welche Drehrichtung die Haltevorrichtung umfassend der Steuerscheibe verschwenkt werden muss.

### Bezugszeichenliste:

- 1: Frontscheibe
- 2: Steuerscheibe
- 3: Rückscheibe
- 4: erste Haltevorrichtung
- 5: Zuströmleitung für Heißwasser von der Heizvorrichtung in Richtung Scheibenventil
- 6: Zuströmleitung für Heißdampf von der Heizvorrichtung in Richtung Scheibenventil
- 7: Drainageablauf für Restwasser vom Scheibenventil in Richtung Restwasserschale
- 8: zweite Haltevorrichtung
- 9: Abströmleitung für Heißwasser vom Scheibenventil in Richtung Brühkammer oder Heißwasserauslauf
- 10: Abströmleitung für Heißdampf vom Scheibenventil in Richtung Heißdampfauslass
- 11: Abströmleitung für Heißdampf vom Scheibenventil in Richtung Dampfentspannungsbehälter
- 12: Drainagezulauf für Restwasser von der Brühkammer in Richtung Scheibenventil
- 13: Durchströmbohrungen um je nach Stellungswinkel den Wasser- bzw. Dampfdurchgang freizuschalten oder zu blockieren
- 14: Fließrichtung Reinwasser
- 15: Fließrichtung Restwasser

## Patentansprüche

1. Heißgetränkeautomat mit einer Brühkammer, einem Heißwasserauslauf, einer Drainage und einem elektrisch betreibbaren keramischen Scheibenventil, mit einer in einer ersten Haltevorrichtung (4) mit zumindest zwei Zuströmleitungen (5, 6) für Heißwasser und Heißdampf drehfest gehaltenen Frontscheibe (1) mit zumindest zwei Zuströmbohrungen, einer drehbaren Steuerscheibe mit Durchströmbohrungen und einer in einer zweiten Haltevorrichtung (8) mit zumindest zwei Abströmleitung (9, 10) für Heißwasser und Heißdampf drehfest gehaltenen Rückscheibe (3) mit zumindest zwei Abströmbohrungen, **dadurch gekennzeichnet, dass** sich in zumindest einem freigeschalteten Zustand eine Zuströmbohrung, eine Durchströmbohrung und eine Abströmbohrung decken.

2. Heißgetränkeautomat nach Anspruch 1, **dadurch gekennzeichnet, dass** sich eine Zuströmbohrung, eine Durchströmbohrung und eine Abströmbohrung decken wenn der Durchfluss für Heißwasser in Richtung Brühkammer oder in Richtung Heißwasserauslauf freigeschaltet ist.

3. Heißgetränkeautomat nach Anspruch 1 oder 2, **dadurch gekennzeichnet, dass** die erste Haltevorrichtung (4) einen Drainagenablauf (7) und die zweite Haltevorrichtung (8) einen Drainagenzulauf (12) aufweist.

4. Heißgetränkeautomat nach Anspruch 1, 2 oder 3, **dadurch gekennzeichnet, dass** die zweite Haltevorrichtung (8) eine Abströmleitung (11) in Richtung eines Dampfentspannungsbehälters aufweist.

5. Heißgetränkeautomat nach einem der Ansprüche 1 bis 4, **dadurch gekennzeichnet, dass** zumindest zwei Durchströmbohrungen als Langlöcher ausgebildet sind.

## Claims

1. Hot drinks machine with a brewing chamber, a hot water outlet, a drain and an electrically operable ceramic disc valve comprising a front disc (1), which is held to be rotationally fast in a first holding device (4) with at least two inflow ducts (5, 6) for hot water and hot steam, with at least two inflow bores, a rotatable control disc with throughflow bores, and a back disc (3), which is held to be rotationally fast in a second holding device (8) with at least two outflow ducts (9, 10) for hot water and hot steam, with at least two outflow bores, **characterised in that** in at least one state of being switched to be free an inflow bore, a throughflow bore and an outflow bore are coincident.

2. Hot drinks machine according to claim 1, **characterised in that** an inflow bore, a throughflow bore and an outflow bore are coincident when the throughflow for hot water is switched to be free in the direction of the brewing chamber or in the direction of the hot water outlet.

3. Hot drinks machine according to claim 1 or 2, **characterised in that** the first holding device (4) has a drain outlet (7) and the second holding device (8) has a drain inlet (12).

4. Hot drinks machine according to claim 1, 2 or 3, **characterised in that** the second holding device (8) has an outflow duct (11) in the direction of a steam relief container.

5. Hot drinks machine according to any one of claims 1 to 4, **characterised in that** at least two throughflow bores are formed as slots.

## Revendications

1. Distributeur de boissons chaudes comprenant une chambre d'infusion, une sortie d'eau chaude, un drainage et une soupape à disque céramique pouvant fonctionner électriquement, comprenant un disque frontal (1), maintenu de manière résistante à la torsion dans un premier dispositif de maintien (4) muni d'au moins deux conduites d'alimentation (5, 6) pour eau chaude et vapeur chaude, doté d'au moins deux alésages d'amenée, comprenant un disque de commande rotatif muni d'alésages de passage et un disque arrière (3) maintenu de manière résistante à la torsion dans un second dispositif de maintien (8) muni d'au moins deux conduites d'écoulement (9, 10) pour eau chaude et vapeur chaude, doté d'au moins deux alésages d'écoulement, **caractérisé en ce que** dans au moins un état libéré, un alésage d'amenée, un alésage de passage et un alésage d'écoulement se recouvrent.

2. Distributeur de boissons chaudes selon la revendication 1, **caractérisé en ce qu'**un alésage d'amenée, un alésage de passage et un alésage d'écoulement se recouvrent lorsque le débit pour l'eau chaude est libéré en direction de la chambre d'infusion ou en direction de la sortie d'eau chaude.

3. Distributeur de boissons chaudes selon la revendication 1 ou 2, **caractérisé en ce que** le premier dispositif de maintien (4) présente une sortie de drainage (7) et **en ce que** le deuxième dispositif de maintien (8) présente une entrée de drainage (12).

4. Distributeur de boissons chaudes selon la revendication 1, 2 ou 3, **caractérisé en ce que** le deuxième dispositif de maintien (8) présente une conduite d'écoulement (11) en direction d'un réservoir de détente de vapeur.

5. Distributeur de boissons chaudes selon l'une quelconque des revendications 1 à 4, **caractérisé en ce qu'**au moins deux alésages de passage sont réalisés en tant que trous oblongs.
